# DEMANDE DE BREVET EUROPEEN

(11) **EP 0 958 748 A2**
(43) Date de publication de la demande: **24.11.1999**
(21) Numéro de dépôt: 99870100.7
(22) Date de dépôt: 11.05.1999
(51) Int. Cl.: A23K 1/00, A23K 1/18, C05F 3/00, C02F 1/38

(54) **Système de transformation de lisier : ZERO-DRAIN**

(30) Priorité: 15.05.1998 BE 9800361
(71) Demandeur: Polymetal S.A., 9130 Beveren-Verrebroek (BE)
(72) Inventeur: Polymetal S.A., 9130 Beveren-Verrebroek (BE)

(57) **Abrégé**

L'invention, le système de transformation de lisier sans résidus propose aux entreprises d'élevage une solution économique pour transformer et recycler leur lisier des animaux à la ferme par :
**1.** Séparation du lisier
**2.** Enrichissement avec CaO de la fraction solide
**3.** Compostation de cette fraction à 80 % Matière Seche
**4.** Nitrification de la fraction liquide
**5.** Dénitrification
**6.** Désinfection par U.V.
**7.** Application comme milieu pour la production d'algues
**8.** Récolte d'algues par concentration
**9.** Dilution du concentrat de 50 % d'eau
**10.** Recyclage d'algues et de l'eau d'algues (dilué 50 %) comme aliment et comme eau potable chez les animaux (porcs)

L'invention recycle le lisier sous différentes formes :
- Un amélioriateur de sol, aussi utilisable comme bio-combustible bon marché
- Un fourrage vert et frais (sans utilisation du sol)
- Une eau potable, riche en sels et minéraux avec un goût d'herbes vertes
- Le recyclage couvre 50 % du besoin de l'eau potable de l'entreprise
- Une cotisation importante à l'amélioration de l'environnement, par une réduction des mauvaises odeurs, l'évaporation de NH₃ dans l'air et de NO₃ et P₂O₅ dans le sol et l'eau du sol
- Une cotisation à la survie des entreprises d'élevage dans les régions de concentration avec leurs industries agro-alimentaires autour.

## Description

L'invention, le système de transformation de lisier sans résidus, propose aux entreprises d'élevage une solution économique pour la transformation du lisier par recyclage.

L'invention combine plusieurs activités de transformation et a comme résultat : "Zero-Drain", pas d'effluent à dépasser ! Ceci par recyclage du lisier sous forme de trois produits c.à d. :
- Améliorateur du sol (compost) de haute qualité avec 80 % de Matière Sèche (M.S.).
- Fourrage vert frais (algues) pour les animaux, sans utilisation de sol.
- Eau potable pour les animaux (50 % de leurs besoin).

Ces résultats se réalisent par le système "Zero-Drain" pendant différentes phases de transformation.

### I. SÉPARATION

Lisier est une masse de liquide visceux avec 8 à 10 % de Matière Sèche (M.S.). Il est nécessaire de séparer cette masse, le plus vite possible. Le lisier frais se laisse séparer plus efficacement.
La séparation de lisier est réalisable avec différentes techniques, parmi lesquelles la centrifugation. Après centrifugation, on reçoit :
1. Une fraction solide avec ± 30 % de Matière Sèche
2. Une fraction liquide avec 3 à 4,5 % de Matière Sèche

Adjonction de floculants améliore le rendement de séparation.

### II. ENRICHIR AVEC CaO

La fraction solide à 30 % Matière Sèche est trop humide et trop peu accessible pour l'air pour se mettre à composter spontanément, p.e. dans un silo.
Pour cette raison le système "Zero-Drain" prévoit d'ajouter 10 à 12 % CaO à la fraction solide.
Par la transformation de CaO à Ca(OH)₂, de l'eau sera retiré de la masse pour ce lier à l'oxyde de chaux pour former l'hydroxyde de chaux. Cette réaction chimique réalise un rehaussement exotherme de température, qui laisse en même temps évaporiser de l'eau.
Ce procès se passe dans un bâtiment, mis en légère sous-pression, qui permet de détourner, les évaporations organiques, comme NH₃ et autres components d'odeur vers un filtre à biomasse, dans lequel le NH₃ et les components d'odeur seront absorbés jusqu'à 96 %.

Le résultat sera une masse biodégradable avec 50 à 60 % de Matière Sèche qui se laisse légèrement entasser (avec beaucoup d'air intermédiaire) pour se laisser composter spontanément, sans intervention mécanique.

### III. COMPOSTER À 80 % MATIÈRE SÈCHE (M.S.)

La production de chaleur pendant le procès de compostation, détruit tous les germes pathologiques et grains de mauvaises herbes et laisse évaporer l'humidité jusqu'une teneur de M.S. de ± 80 %.

Le résultat est un produit sans odeur, riche en chaux et en humus. On a obtenu un améliorateur de sol de haute qualité.

Ce produit peut être utilisé comme engrais organique pour des forêts avec un sol acide et des arbres malades, dans les parcs publique et les jardins privé. Aussi dans les régions de grande culture, hors de Flandre.

Le produit est également utilisable comme source d'énergie. Un bio-combustible bon marché !

### IV. NITRIFICATION DE LA FRACTION LIQUIDE

La fraction liquide pose les problèmes les plus importants pendant la transformation du lisier. Cette fraction liquide sera transformée en plusieurs phases pour être entièrement recyclée.
Le liquide qui sort de la centrifuge de séparation, passe par un stockage intermédiaire suffisamment grand pour y passer un hiver entier. Du stockage intermédiaire le liquide est pompé vers une citerne de nitrification. Cette citerne a un contenu de 60 à 75 litre par équivalent d'un porc charcutier.
L'hauteur est de cinq mètre. Le liquide sera aéré très intensivement, p.e. par l'injection d'air comprimé avec des bulles d'air les plus petites possibles, ou par d'autres systèmes d'aération. Sur le sol de la citerne on pose des éléments en matière plastique qui ont pour but d'allonger le séjour de l'air dans le liquide.

Pour mettre un appui à l'activité des bactéries nitrogènes, les conditions minimales dans la citerne seront :
- Ph : ± 7,5
- Oxygène solutionné : min 0,5 mg/lt
- Température : 5 à 25°C (Moyenne 15°C)
- La boue dans la citerne doit avoir au minimum 15 jours.

Quand les conditions ci-dessus seront réalisées, les bactéries Nitrosomonas et Nitrobacter vont, dans une période de ± 21 jours, dégrader la plus part de la matière organique et vont transformer le NH₃ en NO₃ et NO₂.

Pour se permettre de contrôler le procès d'une façon automatique, il y a des sondes qui commandent l'injection d'air, de chaux ou d'acide et éventuellement le chauffage. Un agitateur de mélange fait partie de l'équipement de la citerne.

### V. DÉNITRIFICATION

La dénitrification est un procès dans lequel le nitrate formé est transformé en azote libre (N₂). Cette transformation est réalisée par l'arrêt de l'injection d'air (oxygène). Les bactéries nitrogènes, confrontés avec un manque d'oxygène, vont décomposer le nitrate formé, pour consommer l'oxygène et libérer l'azote (N₂).
La dénitrification est réalisable, ou bien en une seule citerne (unitank) avec une aération alternative, ou bien dans un système de deux citernes. Dans ce dernier cas, le liquide suffisamment nitrifié est mis dans une deuxième citerne, qui est équipée avec un agitateur lent. Une vanne en-dessous de la citerne permet d'évouer la boue biologique qui se forme dans cette deuxième citerne. Cette boue sera transportée vers la centrifuge de séparation pour joindre la fraction solide et pour être compostée.

### VI. DÉSINFECTION (exposer aux rayons U.V.)

Le procès de destruction de la matière organique, détruit la plus part des germes pathogènes et faëcales. La recherche a montré que les bactéries Escherichia, Coli et Streptococcus faëcales seront détruits à 97 - 98 %. Pour avoir une désinfection totale, le liquide est guidé à travers d'une source de lumière U.V. et est exposé aux rayons U.V.

### VII. PRODUCTION D'ALGUES

Après la désinfection par rayons U.V., le liquide est guidé par un système d'aération statique vers un lac à algues. Ce dernier a un profondeur de 0,30 à 0,40 mètre et est réalisé par une feuille en matière plastique blanche coëxtrudée, pour avoir une résistance et une réflexion maximale aux rayons de soleil. Le lac d'algues est pourvu d'une roue à palettes, qui tient un mouvement lent dans le liquide pour diviser les colonies d'algues dans le liquide et pour obtenir un bon échange des gazes de liquide.
Le liquide prétraité contient encore des nutrients comme phospor, azote, potasse, magnésium, sadium, etc., qui sont utile pour la production d'algues vertes, principalement chlorellas, scenedesmus et spirellas.
Par les traitements préalables il est possible d'utiliser directement le liquide comme milieu d'élevage des algues. Sans traitement préalable, les concentrations des minéraux et des sels seront trop élevés, et devront être dilués pour permettre une production d'algues. L'application de la fraction liquide du lisier non-traité, mais dilué, à comme désavantage que la surface des lacs nécessairs devient tellement grand qui ceci devient impossible.

Dans le lac d'algues on utilise des sondes pour automatiser le procès d'élevage, p.e. sonde de niveau, de la lumière, température, Ph et oxygène et autres.

Les algues se produisent surtout sous l'influence de la lumière (du soleil). Par ceci la production sera le plus élevé dans les mois de Juin, Juillet et Août et il sera presque nihil dans les mois de Décembre, Janvier et Février.

Le stockage intermédiaire (après centrifugation) sera calculé pour un stockage de minimum trois mois durant l'hivers de la fraction liquide produite à la ferme.

### VIII. LA RÉCOLTE D'ALGUES

Algues, surtout chlorellas, sont des plantes monocellulaires qui, par leurs dimensions (5-10 Um) sont très difficiles à récolter. A travers différentes methodes de récolte, une concentration d'algues par hydrocyclone, ou par centrifugation est le plus simple.
Le concentrat d'algues est transféré vers la porcherie dans une citerne quotidienne, pendant que l'effluent de cette opération est conduit à nouveau vers le lac d'algues.
Les algues forment de l'hydrate de carbon par transformation du CO₂ (gaze de carbon) de l'air, et enrichissent l'eau avec l'oxygène. Pendant la nuit les algues consomment l'oxygène de l'eau. Pour cette raison il est à conseiller d'organiser la récolte d'algues le soir et la mettre à la disposition des porcs le plus vite possible.

### IX. DILUER ET RECYCLER LES ALGUES ET L'EAU DU LAC D'ALGUES

Dans la citerne de stockage de l'eau quotidien, le concentrat d'algues est dilué de 50 % avec de l'eau fraîche et distribué aux animaux par le système d'abreuvoir et de sucettes.

### X. AVENTAGES DE L'INVENTION

1. L'invention propose une solution économique pour le problème des surplus de lisier animal dans certaines régions d'élevage intensif par transformation et recyclage du lisier à la ferme d'élevage même, par "une technologie douce".
2. L'exploitation est réalisable par l'éleveur lui-même, éventuellement avec le contrôle à distance du procès par tiers.
3. Le recyclage de la fraction liquide épargne 50 % du besoin d'eau potable pour les animaux.
4. Des algues sont une source d'alimentation de haute qualité, qui peuvent améliorer les résultats zoologiques à la ferme d'élevage.
5. Par le recyclage entier du lisier sans résidus (Zero-Drain) l'invention protecte l'environnement (l'eau, l'air et le sol).
6. L'invention par la solution économique permet aux éleveurs dans certaines régions saturées, de répondre à une façon positive aux normes très strictes imposés par le gouvernement, ce qui permet la conservation de l'élevage intensif et la mise au travail dans les industries autour de ces régions.

### CONCLUSIONS

L'invention, le système de transformation de lisier sans résidus "Zero-Drain" propose aux entreprises d'élevage une solution économique pour la transformation de leur lisier par recyclage.

L'invention combine plusieurs activités de transformation basées sur "des technologies douces".

### Le résultat est :

De l'un côté un améliorateur de sol sans odeur, riche en chaux et en humus qui peut être appliqué dans les fôrets acide, dans les parcs et chez les particuliers, mais aussi utilisé hors de la flandre, dans les régions de grandes cultures avec des terres sensibles à l'érosion. Ou bien comme bio-combustible bon marché.

De l'autre côté une production d'algues comme fourrage vert et frais pour les animaux (surtout porcs) qui est distribué par le système de distribution d'eau. (Des algues produisent le double volume en matière sèche par Ha que des plantes plus noble).

Troisième, l'invention réalise une économie sur l'eau potable de 50 % du besoin, par recyclage de l'eau d'algues. Ainsi les minéraux qui restent dans l'eau d'algues seront recyclés. L'aliment distribué aux animaux tient compte avec la valeur nutritif d'algues et les minéraux résiduels, qui donnent une économie supplémentaire.

### Enfin l'invention :

- Propose une amélioration de l'environnement par une réduction des mauvaises odeurs, par l'évaporation de NH₃ dans l'air et de NO₃ et P₂O₅ dans le sol et dans l'eau du sol.
- Fournit une cotisation importante à la survie des entreprises d'élevages dans les régions de concentration avec leurs industries agro-alimentaires autour.

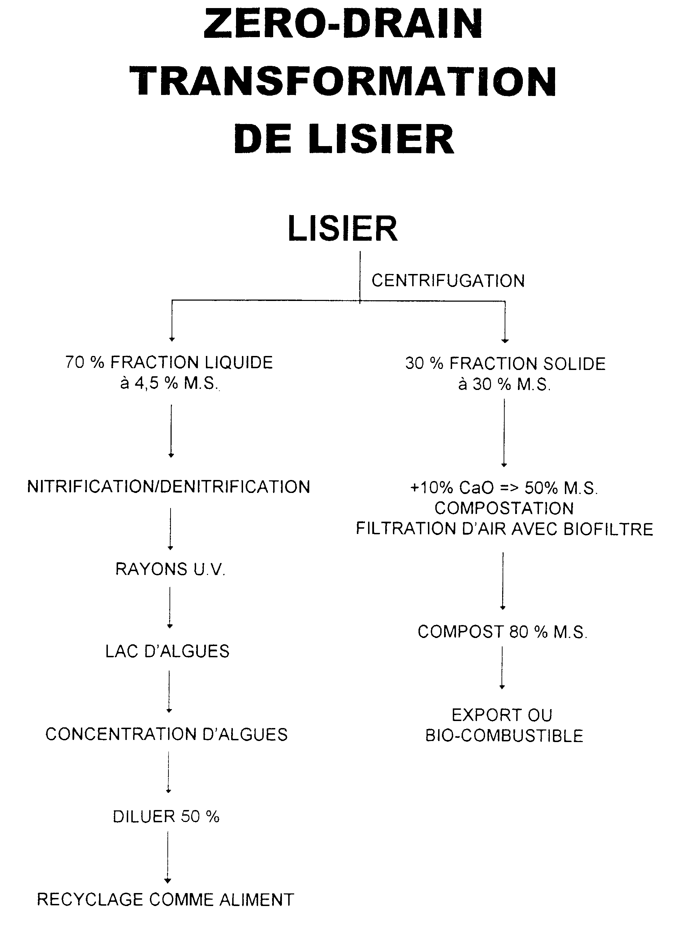

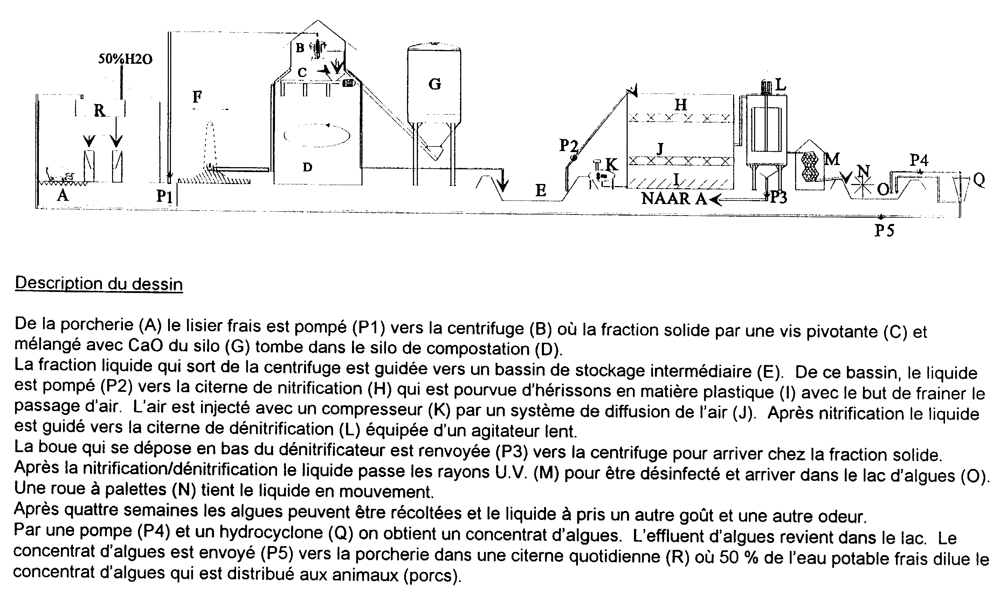

## Revendications

1. Le système de traitement de lisier à la ferme d'élevage permet de recycler la partie liquide du lisier comme boisson pour abreuver les porcs à la ferme.

2. Le système de traitement est basé sur une combination de la technique de séparation, la technique biologique, la technique filtrante, désinfection et élevage d'algues, qui à comme résultat une liquide avec goût et odeur de matière verte (algues), aimée par, et nutritive pour les porcs.
